# EUROPEAN PATENT SPECIFICATION

(11) **EP 0 618 256 B1**
(45) Date of publication and mention of the grant of the patent: **16.09.1998**
(21) Application number: 94109533.3
(22) Date of filing: 17.01.1990
(51) Int. Cl.: C08K 5/00, C08L 77/00

(54) **Polyamide compositions with improved dyeability**
Polyamid-Zusammensetzungen mit verbesserter Anfärbbarkeit
Comositions de polyamide à pouvoir tinctorial amélioré

(30) Priority: 21.01.1989 DE 3901717; 21.01.1989 DE 3901716; 09.09.1989 DE 3930089
(43) Date of publication of application: 05.10.1994
(62) Divisional of application: 90810040.7
(73) Proprietor: Clariant Finance (BVI) Limited, Road Town, Tortola (VG)
(72) Inventor: Kaul, Bansi Lal, CH-4105 Biel-Benken (CH); Vougioukas, Angelos Elie, c/o SANDOZ URUNLERI A.S., TR-34620 Sefakoy, Istanbul (TR)
(74) Representative: D'haemer, Jan Constant

(56) References cited:
- EP-A- 0 292 677
- DE-A- 1 469 633
- DE-A- 3 233 951
- DE-A- 3 233 953
- FR-A- 2 513 646
- GB-A- 1 091 805

## Description

It has been found that the dyeability of synthetic polyamides can be improved by incorporating into them one or more of the following compounds:
a) a compound having at least one sterically hindered amino group which is selected from the group of those of formulae (4), (5), (6), (14), (15) and (16) 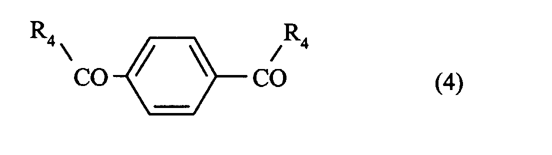 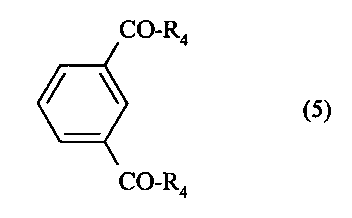 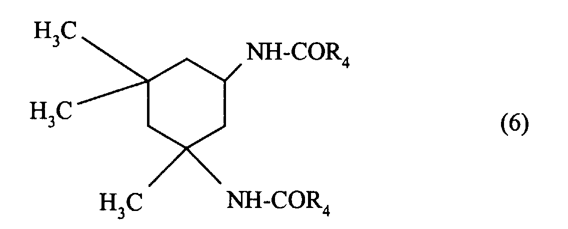 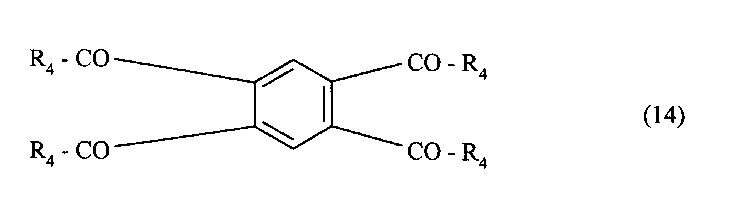 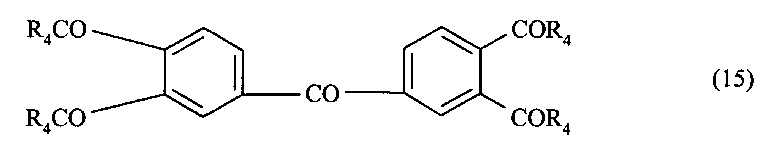 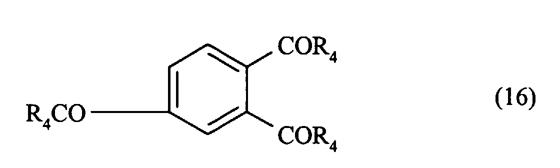 in which R₄ is a group of formula (α) 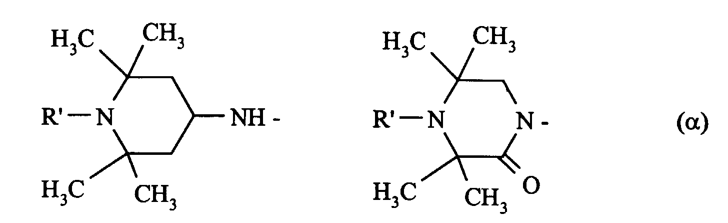 where R' is hydrogen, C₁₋₆alkyl, C₁₋₄alkoxy or -CO-C₁₋₄alkyl; or
b) a synthetic polyamide containing at least one group that is reactive with a hydroxy and/or amino group of formula VIII

   Pa-(CO-R₁₂)ₘ (VIII)

   in which
   - Pa: is a nitrogen containing radical of a synthetic polyamide,
   - R₁₂: is a group containing one or two sterically hindered amino groups wherein the amino nitrogen atoms are incorporated in a cyclic structure, and is derived from R₁₂H having a reactive nitrogen atom that is either an amino group or part of a cyclic group and
   - m: is 1 or 2.

Preferred groups that are reactive to -OH or -NH₂ are e.g. those known as reactive groups in the chemistry of reactive dyes. More preferably these cyclic groups having at least 2 nitrogen atoms (separated preferably by one or two carbon atoms), e.g. triazinyl-, pyrimidyl-, quinoxalyl-, quinazolyl-, phthalazinyl-, benzoxazolyl- and benzthiazolyl-groups, bearing 1 to 3 chlorine atoms on the carbon atoms adjacent to the nitrogen atoms.

The preferred synthetic polyamide of component b) are polymeric isophthalic or terephthalic acid amides of formula (VIII)

Pa-(CO-R₁₂)m (VIII)

in which
- Pa: is a nitrogen containing radical of a synthetic polyamide,
- R₁₂: is a group containing one or two sterically hindered amino groups wherein the amino nitrogen atoms are incorporated in a cyclic structure, and
- m: is 1 or 2.

The compounds of formula (VIII) can be produced by known methods.

The compounds of formula (VIII) can be produced when a synthetic polyamide having a terminal carboxy group or functional derivative thereof (e.g. the acid chloride or an ester) is reacted during the polycondensation process with one or more amino groups or one or more sterically hindered amino group containing compounds, preferably of aromatic nature.

The compounds of formula R₁₂H which are used for producing the compounds of formula (VIII) have a reactive nitrogen atom that is either an amino group or part of a cyclic group, for example a piperazine group. These compounds also contain one or two sterically hindered nitrogen atoms in a cyclic structure, for example N-C₁₋₄alkyl or N-acyl substituted 2,2,6,6-tetraalkylpiperidyl-4-groups.

The preparation of such modified synthetic polyamides having reactive groups and amine groups are well known to a man well-skilled in the art.

The synthetic polyamides according to the invention can be dyed in the mass with any type of dyestuff, provided that it is stable at high temperatures (of the melt). Preferred dyestuff groups are the monoazo-metal complexes, in particular the chrome complexes that are sufficiently stable at high temperatures to be used. Preferred reactive dyestuffs that can be used are the halogen-containing triazinyl or vinyl group containing metallized azo dyestuffs (i.e. those metallized with chromium, nickel or copper). Such reactive dyestuffs have been commercially available for a number of years.

The preparation of modified synthetic polyamides according to the invention can be effected in a conventional manner, preferably by mixing the reactive compounds with molten synthetic polyamide, e.g. in an extruder prior to spinning, before or during the polycondensation process of the synthetic polyamide itself.

Generally, one uses 0.5 to 5% by weight of the compounds a) or b) based on the weight of synthetic polyamides. More preferably 1 to 2% by weight of the compounds a) or b) are used.

The synthetic polyamides according to the invention containing a compound a) or b) are outstanding in many respects compared to synthetic polyamide which does not contain a compound a) or b) - hereafter referred to as "untreated polyamide". When dyeing of untreated polyamide and polyamide according to the invention with acid dyes is carried out (using the same quantity of dyestuffs on the substrate), a considerably deeper and more brilliant dyeing is obtained with the synthetic polyamides according to the invention than with untreated polyamide. Bath exhaustion is noticeably better and the fastnesses, especially wet fastnesses, are improved.

If reactive dyes are used to dye synthetic polyamides according to the invention, in general between 0.05 and 5% by weight of the reactive dyes are used based on the weight of synthetic polyamides. More preferably the amounts of reactive dye used is between 0.1 and 3% by weight. The dyeings so obtained are also deeper than exhaust dyeings made with the same amount of dye on the untreated synthetic polyamide.

## Claims

1. Polyamide composition comprising: a synthetic polyamide and
a) a compound having at least one sterically hindered amino group which is selected from the group of those of formulae (4), (5), (6), (14), (15) and (16) 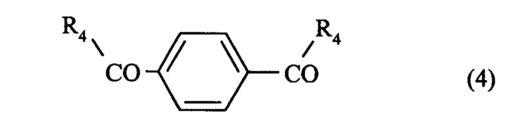 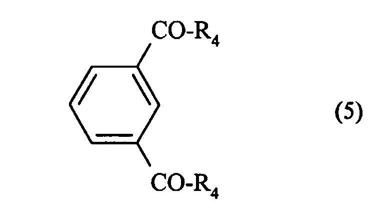 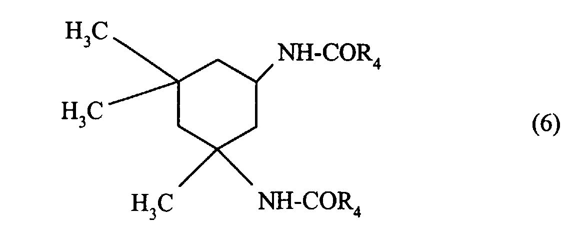 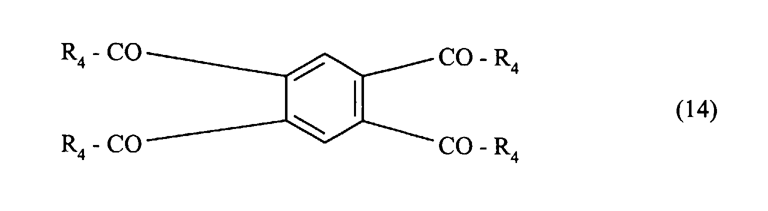 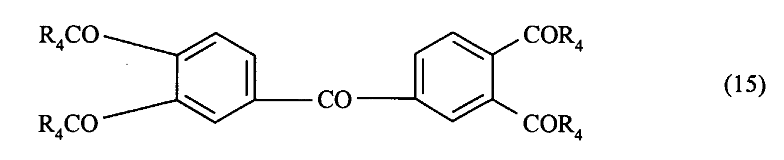 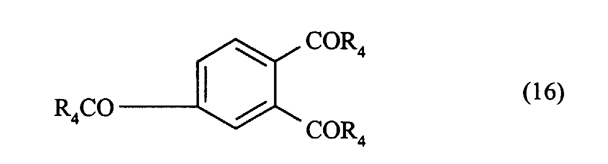 in which R₄ is a group of formula (α) 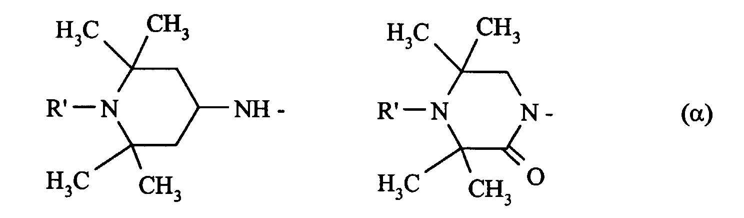 where R' is hydrogen, C₁₋₆alkyl, C₁₋₄alkoxy or -CO-C₁₋₄alkyl; or
b) a synthetic polyamide containing at least one group that is reactive with a hydroxy and/or amino group of formula VIII
Pa-(CO-R₁₂)ₘ (VIII)
in which
Pa is a nitrogen containing radical of a synthetic polyamide,
R₁₂ is a group containing one or two sterically hindered amino groups wherein the amino nitrogen atoms are incorporated in a cyclic structure and is derived from R₁₂H having a reactive nitrogen atom that is either an amino group or part of a cyclic group, and
m is 1 or 2.

2. Process for the preparation of the polyamide composition according to claim 1 by mixing the compounds of formulae 4, 5, 6, 14, 15 or 16 or the synthetic polyamide of formula VIII with molten synthetic polyamide before or during the polycondensation process of the synthetic polyamide.

3. Process for the improvement of the dyeability of synthetic polyamides by incorporating into them
a) a compound having at least one sterically hindered amino group as defined in claim 1, or
b) a synthetic polyamide containing at least one group that is reactive with a hydroxy and/or amino group as defined in claim 1.

4. Use of
a) a compound having at least one sterically hindered amino group as defined in claim 1, or
b) a synthetic polyamide containing at least one group that is reactive with a hydroxy and/or amino group as defined in claim 1
for the improvement of the dyeability of synthetic polyamides.

## Patentansprüche

1. Polyamid-Zusammensetzung bestehend aus einem synthetischen Polyamid und
a) einer aus der Gruppe der Verbindungen mit Formeln (4), (5), (6), (14), (15) und (16) ausgewählten Verbindungen mit mindestens einer sterisch gehinderten Aminogruppe 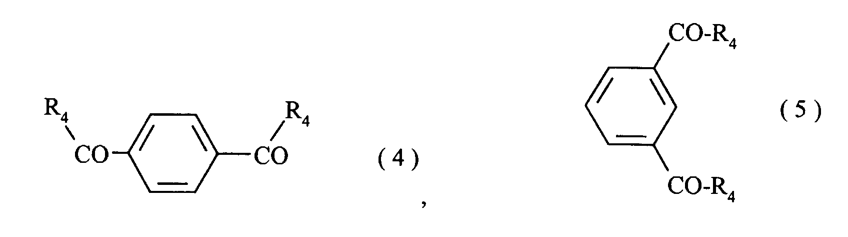 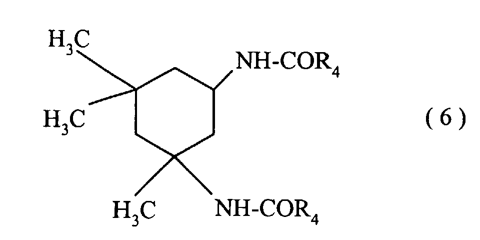 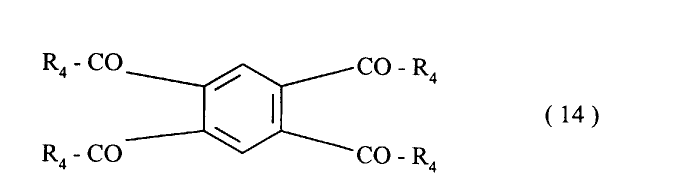 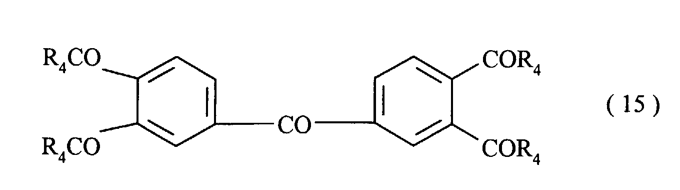 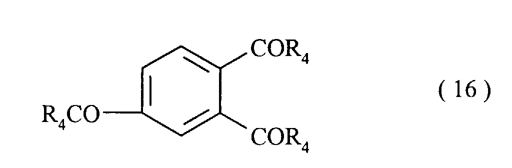 worin R₄ eine Gruppe der Formel (α) ist 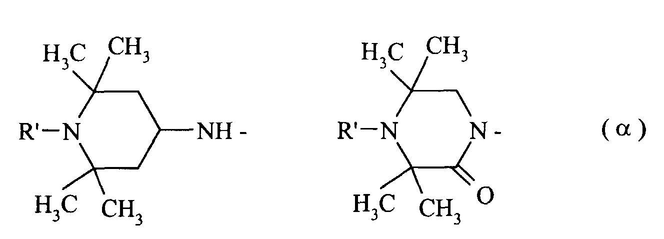 und R' für Wasserstoff, C₁₋₆Alkyl, C₁₋₄Alkoxy oder -CO-C₁₋₄Alkyl steht; oder
b) einem synthetischen Polyamid der Formel (VIII) mit mindestens einer Gruppe, die mit einer Hydroxy- und/oder Aminogruppe reagieren kann
Pa-(CO-R₁₂)ₘ (VIII)
worin
Pa für den Stickstoff enthaltenden Rest eines synthetischen Polyamids,
R₁₂ für eine Gruppe mit einer oder zwei sterisch gehinderten Aminogruppen, wobei die Stickstoffatome dieser Aminogruppen in einer zyklischen Struktur enthalten sind und diese Gruppe von R₁₂H mit einem reaktiven Stickstoffatom abgeleitet ist, welches eine Aminogruppe oder Teil einer zyklischen Struktur ist; und
m für 1 oder 2 stehen.

2. Verfahren zur Herstellung einer Polyamid-Zusammensetzung gemäss Anspruch 1 durch Mischen der Verbindungen der Formeln (4), (5), (6), (14), (15) und (16) oder des synthetischen Polyamids der Formel (VIII) mit geschmolzenem synthetischen Polyamid vor oder während des Polykondensationsverfahren des synthetischen Polyamids.

3. Verfahren zur Verbesserung der Anfärbbarkeit von synthetischen Polyamiden durch Einarbeitung darin
a) einer, wie im Anspruch 1 definierten, Verbindung mit mindestens einer sterisch gehinderten Aminogruppe oder
b) eines, wie im Anspruch 1 definierten, synthetischen Polyamid mit mindestens einer Gruppe, die mit einer Hydroxy- und/oder Aminogruppe reagieren kann.

4. Verwendung
a) einer, wie im Anspruch 1 definierten, Verbindung mit mindestens einer sterisch gehinderten Aminogruppe oder
b) eines, wie im Anspruch 1 definierten, synthetischen Polyamid mit mindestens einer Gruppe, die mit einer Hydroxy- und/oder Aminogruppe reagieren kann,
zur Verbesserung der Anfärbbarkeit von synthetischen Polyamiden.

## Revendications

1. Composition de polyamide comprenant : un polyamide synthétique et
a) un composé ayant au moins un groupe amino stériquement encombré, choisi dans le groupe des composés répondant aux formules (4), (5), (6), (14), (15) et (16) 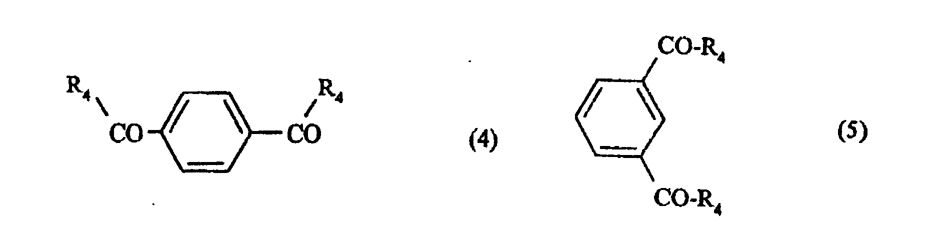 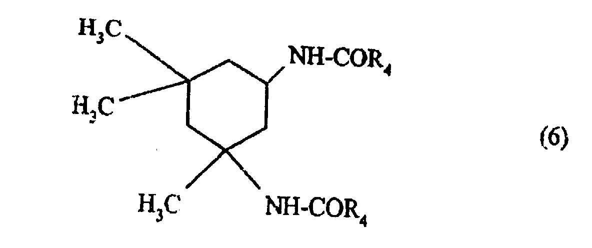 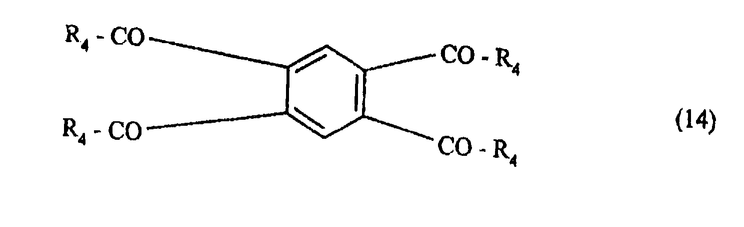 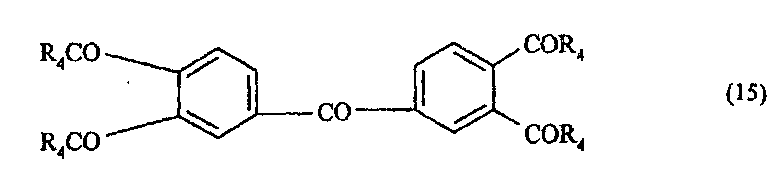 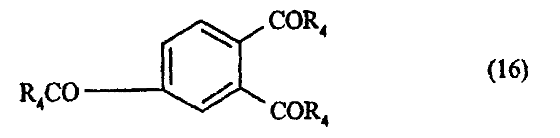 dans lesquelles R₄ signifie un groupe de formule (α) 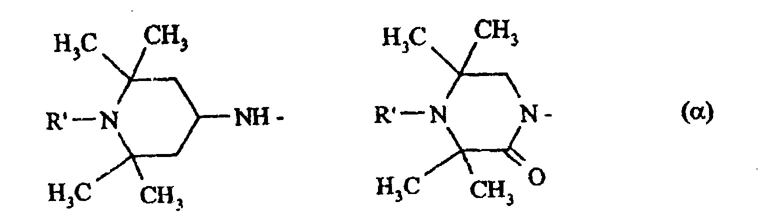 où R' signifie l'hydrogène ou un groupe alkyle en C₁-C₆ , alkoxy en C₁-C₄ ou (alkyle en C₁-C₄)-CO- ; ou
b) un polyamide synthétique contenant au moins un groupe réactif avec un groupe hydroxy et/ou avec un groupe amino et répondant à la formule VIII
Pa-(CO-R₁₂)ₘ (VIII)
dans laquelle
Pa signifie un radical contenant de l'azote d'un polyamide synthétique,
R₁₂ signifie un groupe contenant un ou deux groupes amino stériquement encombrés dans lequel les atomes d'azote des groupes amino sont incorporés dans une structure cyclique, et dérivant d'un composé R₁₂H ayant un atome d'azote réactif qui est un groupe amino ou qui fait partie d'un groupe cyclique, et
m signifie 1 ou 2.

2. Procédé de préparation de la composition de polyamide selon la revendication 1, caractérisé en ce qu'on mélange le composé de formule 4, 5, 6, 14, 15 ou 16 ou le polyamide synthétique de formule VIII avec le polyamide synthétique à l'état fondu, avant ou durant le procédé de polycondensation du polyamide synthétique.

3. Procédé pour améliorer l'affinité tinctoriale des polyamides synthétiques, caractérisé en ce qu'on incorpore dans ces polyamides synthétiques
a) un composé ayant au moins un groupe amino stériquement encombré, tel que défini à la revendication 1, ou
b) un polyamide synthétique contenant au moins un groupe réactif avec un groupe hydroxy et/ou avec un groupe amino, tel que défini à la revendication 1.

4. Utilisation
a) d'un composé ayant au moins un groupe amino stériquement encombré, tel que défini à la revendication 1, ou
b) d'un polyamide synthétique contenant au moins un groupe réactif avec un groupe hydroxy et/ou avec un groupe amino, tel que défini à la revendication 1,
pour améliorer l'affinité tinctoriale des polyamides synthétiques.
